# EUROPEAN PATENT APPLICATION

(11) **EP 2 854 317 A1**
(43) Date of publication of application: **01.04.2015**
(21) Application number: 13306317.2
(22) Date of filing: 26.09.2013
(51) Int. Cl.: H04H 60/73

(54) **Method for providing a client device with a media asset**

(71) Applicant: ALCATEL LUCENT, 92100 Boulogne-Billancourt (FR)
(72) Inventor: Liekens, Werner, 2018 Antwerpen (BE); Justen, Pascal, 2018 Antwerpen (BE); De Loof, Jourik, 2018 Antwerpen (BE)
(74) Representative: ALU Antw Patent Attorneys

(57) **Abstract**

The present invention relates to a system for providing a client device with a media asset for playing out said media asset at said client device, in which system portions of said media asset being associated with metadata. The system comprises:
- means configured to forward a portion of said media asset towards said client device and
- means configured to notify an integration server of an identification of said portion of said media asset being provided to said client device for play out at said client device; and
- means, in said integration server configured to retrieve metadata associated with said portion of said media asset provided; and
- means in said integration server, configured to retrieve at least one service description in function of said metadata retrieved, each service description of said at least one service description defining a respective service to be provided by an internet of things enabled device of a plurality of internet of things enabled devices associated with a user of said client device; and
- means, in said integration server, configured to determine, in function of said portion of media asset being provided to said client device, said metadata associated with said portion of said media asset provided and said at least one service description associated with an of internet of things device, a media experience enrichment action.

## Description

The present invention relates to the field of media asset provisioning and playing out of such media asset at a client device.

A well known multimedia environment includes a media player for playing out received media, via a set-top box or other customer-premises equipment. Such media player, e.g. a television connected via a set top box to the internet, an internet connected Computer including Personal Computers, mobile devices etc. Such multimedia environment typically also includes a media server where such media server refers either to a dedicated computer appliance or to a specialized application software, ranging from an enterprise class machine able to provide video on demand, to more commonly, a small personal computer or Network Attached Storage NAS for the home, dedicated for storing various digital media (meaning digital videos/movies, audio/music, and picture files).

In such media environment, a user at home is able to select a movie from the movie rental catalog maintained by the media server either locally in the home or a device maintained by a global video on demand provider for play out of the movie selected at a client device of this user.

The multimedia experience of such user watching the selected, played out media is restricted to sound and vision of the movie currently being played, not facilitating any enhancement of the multimedia experience.

An objective of the present invention is to provide a method, related system and related devices of the above known type wherein the mentioned drawback of the known multimedia environment are overcome.

According to an embodiment of the present invention, this objective is achieved by the method, related system and related devices for providing a client device with a media asset for playing out said multimedia asset at said client device, portions of said media asset being associated with metadata, wherein the method comprises the steps of:
-. a media server forwarding a portion of said media asset towards said client device; and
-. said media server notifying an integration server of said portion of said media asset being provided to said client device for play out at said client device; and
-. said integration server retrieving metadata associated with said portion of said media asset provided; and
-. said integration server retrieving at least one service description in function of said metadata retrieved, each service description of said at least one service description defining a service to be provided by a respective internet of things enabled device of a plurality of internet of things devices, each internet of things enabled device being associated with a user of said client device; and
-. said integration server, determining, in function of said portion of media asset being provided to said client device, said metadata associated with said portion of said media asset provided and said at least one service description , a media experience enrichment action. In this way, by at first the media server, forwarding a portion of said media asset towards said client device, subsequently the media server notifying an integration server of said portion of said media asset or of an identification thereof (e.g. a number identifying the portion) being provided to said client device for play out at said client device, said integration server retrieving metadata associated with the portion of said media asset provided to the client device, additionally said integration server retrieving at least one service description in function of said metadata retrieved, where each service description of the at least one service description defines a service to be provided by a respective internet of things enabled device of a plurality of internet of things devices, each internet of things enabled device being associated with a user of said client device, said integration server in turn is able to determine, in function of:
- said portion of media asset being provided to said client device,
- said metadata associated with said portion of said media asset provided, and
- said at least one service description, a media experience enrichment action. Such media experience enrichment action may include an invocation of a service of an internet of things enabled device associated with a user of said client device and may additionally or alternatively include a media asset management action such as for example stop play out, pause play out, restart play out, fast forwarded, skip section in case of instruction to skip an knowledge enhancement media asset, go back section in case of wrong answer etc.

In this manner, the media experience formed by the sound and/or vision of the played out media asset may be enriched as the determined additional media experience enrichment action causes one or more additional environmental effects, e.g. in the home of the user. Such additional environmental effect may include ringing of a door bell or phone, dimming of the light in the room, increase or decrease temperature in the room or stream cold or warm air, increase or decrease humidity of the air, vibrating the floor with low or high intensity, requesting to do measurements like bloodpressure, weight, glucose, cholesterol, decreasing increasing temperature of oven, etc. In this manner the media experience is enriched with additional sensations leading to an enhanced user experience.

Alternatively, or additionally the media experience may be enhanced by requiring an action to perform in advance of proceeding an stopped/paused media asset play out for instance in case of a learning media asset such as e-learning module giving the user an option to answer a question before proceeding the play out.

Such media experience enrichment action may include an invocation of a service of an internet of things enabled device associated with a user of said client device and may additionally or alternatively include a media asset management action such as for example stop play out, pause play out, restart play out, fast forwarded, skip section in case of instruction to skip an (knowledge enhancement, e.g. learning) media asset, go back section in case of wrong answer, etc.

Such media asset may be any audio and/or video asset such as videos/movies, audio/music, and pictures or any combination thereof.

The media asset that is forwarded by the media server may be divided in portions such as frames in case of video where each frame is identified e.g. by a number. Such portion alternatively may be identified by a label in the video stream. The start position of the portion in the media asset may be identified by its intrinsic and unique frame number, or indirectly by a metadata identifier that refers and is associated to said start position. This explicit identifier may be represented by a sequence number or an alpha-numeric string e.g. a text label in ASCII or UTF-8 format.

The metadata identifier may be explicitely embedded in the multimedia bytestream at given start position. Alternatively, all pairs of metadata identifiers and their associated start position belonging to the same multimedia stream may be grouped together and stored in a special metadata section. This special metadata section can either be stored in an external file or on its turn embedded in a media stream header. For the former case, an URL of the external metadata file must be resolved, either this URL is supplied externally , either this URL is embedded in the media file , or by predefined convention (e.g. video file name is avatar.mp4 and corresponding meta data file name is avatar.mme).

An internet of things enabled device associated with a user of the client device means that there is link between the user of the client device and the internet of things enabled device in that the device is owned by the user or is at least available for providing services to this user. This association indicates the availability of internet of things enabled devices for the meant user.

Further each portion of such media as e.g. a frame may be associated with metadata, where the metadata includes information (such as transcripts of conversations and text descriptions of its scenes) about the contents of such portion of the media asset.

Moreover, "The Internet of Things loT is a computing concept that describes where everyday physical objects are able to be connected to the Internet and will be able to identify themselves to other devices. Such physical object connected to the internet are called internet of things enabled devices. Such internet of things enabled devices may include one or more of the following: sensor technologies, wireless technologies, QR codes, RFID tag and may operate according to one or more of the following standards of "ZigBee" (http://www.zigbee.org/), "Zwave" , "Coap", "KNX", "Propriety protocols".

The Internet of Things refers to uniquely identifiable objects and their virtual representations in an Internet-like structure. Objects being equipped with identifiers can be managed and inventoried by computers. Tagging of things may be achieved through such technologies as near field communication, barcodes, QR codes and digital watermarking. Such managing and communicating with internet of things enabled devices may be subject to existing end-user agreements.

Each of such internet of things enabled devices is adapted to provide a service.

Such service provides access to the functionality with which information provided by resources, which may run on Internet of Things devices, can be retrieved or actuation tasks can be executed. As a basis for finding such device and interacting with services, services need to be appropriately described, which is done in the form of service descriptions. Service descriptions contain information about the interface of the service, both on a syntactic as well as a semantic level, e.g. the required inputs, the provided outputs or the necessary pre-conditions as well as post-conditions.

Furthermore, the service description may include information regarding the functionality of the resources, e.g. the type of resource, the processing method or algorithm etc., or information regarding the device on which the resource is running, e.g. it's hardware or its geographical location.

Examples of such services are ringing of a door bell or phone, dimming of the light in the room, increase or decrease temperature in the room or stream cold or warm air, increase or decrease humidity of the air, vibrating the floor with low or high intensity (at a movie theater) , requesting to do measurements like blood-pressure, weight, glucose, cholesterol , decreasing increasing temperature of oven (e.g. in case a cooking class or cooking education at home), where the door bell, the lighting system the heating system, the oven, the devices for making measurements etc. are internet/intranet coupled devices.

A further definition of Internet of Things (IoT) can be found at http://en.wikipedia.org/wiki/Internet_of_Things#cite_note-19:

Internet of Things (IoT) is an integrated part of Future Internet and could be defined as a dynamic global network infrastructure with self configuring capabilities based on standard and interoperable communication protocols where physical and virtual 'things' have identities, physical attributes, and virtual personalities and use intelligent interfaces, and are seamlessly integrated into the information network. In the loT, 'things' are expected to become active participants in business, information and social processes where they are enabled to interact and communicate among themselves and with the environment by exchanging data and information 'sensed' about the environment, while reacting autonomously to the 'real/physical world' events and influencing it by running processes that trigger actions and create services with or without direct human intervention. Interfaces in the form of services facilitate interactions with these 'smart things' over the Internet, query and change their state and any information associated with them, taking into account security and privacy issues.

In a further embodiment, said media experience enrichment action includes an invocation of a service of a respective internet of things enabled device that is associated with a user of said client device. Such service e.g. may be ringing of the internet/intranet connected door-bell or requesting information, like temperature, humidity, GPS position of the client device, where the GPS position could be applied for locating the user for example in a multimedia touristic guides where than for example depending on the location a new stream is started on the persons interest of the nearby attractions.

In another embodiment, said media experience enrichment action may include a media asset management action such as for example stop play out, pause play out, restart play out, fast forwarded, skip section, go back section etc.

The present invention also relates to embodiments of a system for providing a client device with a media asset for playing out said multimedia asset at said client device, portions of said media asset being associated with metadata, said system comprising:
-. means configured to forward a portion of said media asset towards said client device; and
-. means configured to notify an integration server of an identification of said portion of said media asset being provided to said client device for play out at said client device; and
-. means in said integration server retrieving metadata associated with said portion of said media asset provided; and
-. means, in said integration server, configured to retrieve metadata associated with said portion of said media asset provided; and
-. means in said integration server, configured to retrieve at least one service description in function of said metadata retrieved, each service description of said at least one service description defining a service to be provided by a respective internet of things enabled device of a plurality of internet of things enabled devices, each of internet of things enabled devices being associated with a user of said client device; and
-. means, in said integration server, configured to determine, in function of said portion of media asset being provided to said client device, said metadata associated with said portion of said media asset provided and said at least one service description, a media experience enrichment action.

The present invention additionally relates to embodiments of an integration server, according to claim 7, an internet of things enabled server according to claim 10, a media server according to claim 11 and an internet of things enabled device according to claim 12.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 represents a functional representation of an embodiment of the system for providing a client device with a media asset for playing out.
Fig 2. represents a functional representation of an embodiment of the Integration server according to the present invention.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

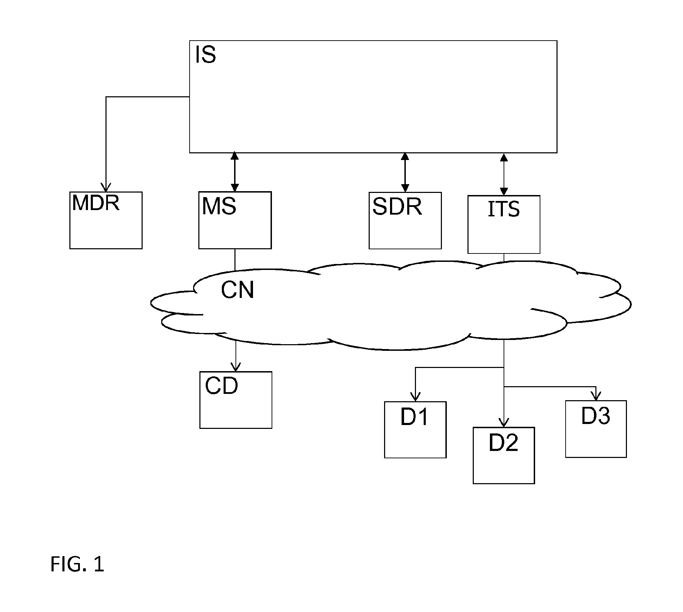

In the following paragraphs, referring to the drawing in FIG.1, an implementation of the system is described. In the second paragraph, all connections between mentioned elements are defined.

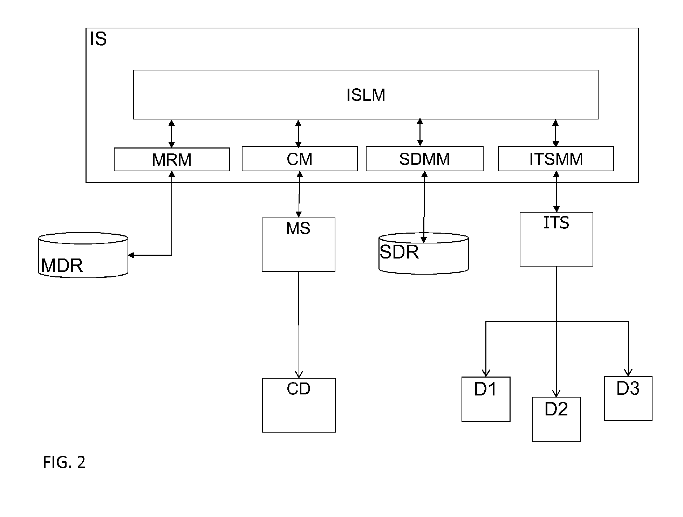

Subsequently all relevant functional means of the mentioned system as presented in FIG.2 are described followed by a description of all interconnections. In the succeeding paragraph the actual execution of the system is described.

A first essential element of the system is the client device CD such as a media player being a television connected via a set top box to the internet for playing a received media asset at the screen and associated audio via integrated or coupled speakers, an internet connected Computer, such as a personal computer coupled to the internet, for playing received media at the screen and associated audio via integrated or coupled speakers, or a mobile device adapted to play media assets at a screen an speakers thereof etc.

Such system further comprises a media server MS where such media server refers either to a dedicated computer appliance or to a specialized application software, ranging from an enterprise class machine able to provide video on demand, to more commonly, a small personal computer or Network attached storage NAS for the home, dedicated for storing various digital media (meaning digital videos/movies, audio/music, and picture files).

A further essential element of the embodiment of the present invention is the Integration server IS that is configured to determine the appropriate media experience enrichment action based on the metadata available, the service descriptions of the various available internet if things enabled devices.

The Integration server IS is configured to determine, in function of said portion of media asset being provided to said client device, metadata associated with said portion of said media asset provided and said at least one service description, a media experience enrichment action and subsequently instruct the respective device to execute the determined media experience enrichment action in this way enhancing the played out media asset.

The integration server IS may be an in-house device, an external device being located at premises of e.g. a video on demand provider of the media server or may alternatively be located on a dedicated server in the internet cloud.

Another essential element of the embodiment of the present invention is an Internet of things Server ITS that is configured to manage or control the internet of things enabled devices that are associated with the user of the client device, e.g. the inhabitant of the house, where in this house a client device CD for playing any media asset is installed and additionally contains a number of internet of things enabled devices D1, D2, D3. These internet of things enabled devices D1, D2, D3 may be a door-bell connected to the Internet of things Server ITS, a heating-cooling system centrally controlled, a dimmable lighting system, an alarm system, a GPS device, or any other control system such as devices requesting information, like temperature, humidity, GPS position of the client device, where the GPS position could be applied for locating the user for example in a multimedia touristic guides. Additionally or alternatively such internet of things enabled devices could be devices for increase or decrease humidity of the air, vibrating the floor with low or high intensity (at a movie theater) , requesting to do measurements like blood-pressure, weight, glucose, cholesterol , decreasing increasing temperature of oven (e.g. in case a cooking class or cooking education at home), where each of the devices such as the lighting system the heating system, the oven, the devices for making measurements etc. are internet/intranet coupled devices being coupled via the internet and/or intranet to the Internet of things Server ITS.

Suppose D1 is the internet connected doorbell, D2 is the dimmable lighting system in the building and D3 is the centrally controlled heating-cooling system.

Additionally this embodiment of the present invention comprises a metadata repository MDR for storing all metadata related to a metadata asset to be played out. Such metadata repository MDR may include the metadata of a plurality of media assets for play out.

This metadata may include information (such as transcripts of conversations and text descriptions of its scenes) about the contents of such portion of the media asset.

Finally this embodiment of the present invention comprises a service description repository SDR configured to store at least one service description where each such service description defines a respective service to be provided by a respective internet of things enabled device of a plurality of internet of things enabled devices D1, D2, D3, where each internet of things device being associated with a user of said client device. This association indicates the availability of internet of things enabled devices for the meant user.

In the user's environment a number of internet of things devices such as actuators and/or sensors are present. Such actuators and/or sensors optionally may be integrated in the client device CD or in another device associated with a user of such client device. An example of such another device may be a second screen device or be a Smart-Phone or tablet PC.

The actuators and/or sensors upload their capabilities in the form of service description to a well-known server, the service description repository SDR. In the well-known server SDR, associations are made between the user and the actuators and/or sensors of the user's environment (implying the availability of sensors/actuators for use in the enhancement of the multimedia experience).

The client device CD may be coupled to the media server MS over communications network CN. The communications network CN may include a wireless or wired network in case the media server is located in-house. The communications network CN may include a wireless - or wired network in-house and a Digital subscriber line access network with coupled DSL modems or may include a cable network, a mobile communication access network connecting the client device CD via the internet to the media server in case the media server is an external device maintained by an external party such as a video on demand provider.

In case of an in-house system the integration server IS may be coupled to the media server MS over a wireless or wired connection.

Further the internet of things enabled devices D1, D2, D3 may be coupled over a communications network CN including a wireless or wired network to the Internet of things Server ITS that in turn is coupled to the integration server over a wired or wireless connection if both devices are in house devices.

Alternatively, in case the integration server IS is an external device, these devices may be coupled over access networks and an internet network containing a fixed network or any combination of fixed or mobile network.

The service description repository SDR and metadata repository MDR may be coupled to the integration server IS over any combination of wired- or wireless connections.

Subsequently all relevant functional means of the mentioned system as presented in FIG.2 are described followed by a description of all interconnections. In the succeeding paragraph the actual execution of the system is described.

The Integration server IS comprises a communications module CM that is configured
to receive a notification from a media server MS of a portion of said media asset being provided to said client device CD for play out at said client device CD and a metadata retrieval module MRM that is configured to retrieve metadata associated with said portion of said media asset provided from a metadata repository MDR; and a service description management module SDMM that is configured to retrieve in function of said metadata retrieved, at least one service description, defining a service to be provided by a respective internet of things enabled device of a plurality of internet of things devices D1, D2, D3 associated with a user of said client device CD.

Further, the integration server IS comprises a internet of things server management module ITSMM that is configured to manage the invocation of a service of an internet of things enabled device D1, D2, D3 that is associated with the user of said client device CD. Additionally the integration server IS comprises an Integration server logic module ISLM that is configured to
determine, in function of said portion of said media asset being provided to said client device CD, said metadata that is associated with said portion of said media asset provided and said at least one service description, where each service description of said at least one service description is associated with a respective internet of things enabled device, a media experience enrichment action.

Moreover, the a communications module CM of the integration server IS further is configured to instruct said media server MS to execute a media asset management action such as stop, restart media asset, play out fast forwarded, skip section, go back section etc.

Alternatively or additionally to the service provided by any of the internet of things enabled devices D1, D2, D3, the media experience may be enhanced by requiring an action to perform in advance of proceeding an stopped/paused media asset play out for instance in case of a learning media asset such as e-learning module giving the user an opportunity to answer a question before proceeding the play out.

In order to explain the execution of the present invention it is supposed that a user of the client device CD selects, at the media server MS, being a local in-house media server or alternatively an external media server such as a rental store, a movie, for example the "The Postman never rings twice" for viewing. The media server MS, at receipt of this request starts forwarding the successive portions, i.e. the frames, corresponding to the media asset, i.e. the movie, towards the client device CD. Before, at the same time or immediately after the forwarding, by the media server MS, of a frame of the movie towards the client device CD, the media server MS sends a notification, towards the communications module CM of the integration server IS, which notification includes a reference to the portion of said media asset being provided to said client device CD for play out at said client device CD. The notification may comprise an identifier of the forwarded portion, i.e. frame where the identifier may be a frame number. The identification of the frame is handed over to the integrated server Logic Module ISLM that based on the identification of the portion, i.e. frame, is instructed to retrieve metadata that is associated with said portion of said media asset provided to the client device CD. The Metadata retrieval module MRM receives an instruction for retrieving the metadata associated with the forwarded portion and subsequently requests the metadata repository MDR to provide the metadata associated with the meant portion of the media asset. Subsequently the metadata repository MDR provides via the metadata retrieval Module MRM the integration server logic module ISLM with the associated metadata.

Based on the retrieved metadata that is associated with the forwarded portion of the media asset, the integrated server Logic Module ISLM will retrieve one or more service descriptions each of a corresponding internet of things enabled device D1, D2, D3 that matches with the retrieved metadata where the retrieving is executed by means of the service description management module SDMM that fetches the matching service descriptions each corresponding to an internet of things enabled device D1, D2, D3 that is associated with a user of said client device.

Subsequently, the integrated server Logic Module ISLM of the integration server IS, determines, in function of the portion of the media asset being provided to said client device CD, the metadata associated with said portion of said media asset provided and at least one service description associated with an of internet of things device, a media experience enrichment action. The integrated server Logic Module ISLM, subsequently, based on the determined media experience enrichment action generates an instruction destined for the internet of things server ITS and/or an instruction that is destined for the media server MS. The media experience enrichment action defines the action to be performed by each of the respective internet of things devices. The instruction specifies the actions of each of the respective devices and additionally or alternatively defines the media management actions to be performed by the media server MS (e.g. fast forward, stop playing etc.)

This generated media experience enrichment instruction is forwarded to the internet of things server management module ITSMM that instructs the corresponding internet of things server ITS to execute the corresponding service. Alternatively or additionally the determined media experience enrichment instruction is forwarded to the communications module CM that instructs the media server MS to execute a determined management action.

In this manner the integration server IS keeps track of the frames sent to the client device CD. For each frame it is checked whether or not metadata is available in the metadata repository. If metadata is available, additionally a list of available, i.e. associated with the user, internet of things enabled device with corresponding service descriptions is retrieved.

Based on the available metadata, the potential available service descriptions of corresponding devices, the integrated server Logic Module ISLM decides which service description fits to the metadata and subsequently selects the service description that best suits to the metadata. If for example frame-number 254 is hit, a metadata item related to ringing doorbell is retrieved, the service description of the doorbell is selected and subsequently the integrated server Logic Module ISLM by means of the internet of things server management module ITSMM instructs the internet of things Server ITS to actuate the users home environment by ringing the home doorbell at playing frame 254 of the movie.

On frame-number 45687 for example, metadata related to a very dark scene in the movie is retrieved, the service description of a light dimmer is encountered and hence the integrated server Logic Module ISLM by means of the internet of things server management module ITSMM instructs the internet of things Server ITS to actuate the users home environment i.e. the light dimmer and dimming the light of the living room of the user to 10% at playing the frame with number 45687.

In another embodiment the user selects an interactive movie, for example "Dora", which movie is intended for little children wherein some response or action of a child watching the movie is required by the integration server IS.

The signaling between the client device CD, the media server MS, the integration server IS, the metadata repository MDR, the service description repository SDR and the internet of things Server ITS is performed in a similar way as the first embodiment.

The Integration server IS retrieves the meta data from the metadata repository MDR, and checks the environment of the user by looking up the services of the respective devices associated with the user.

In the user's home environment a number of actuators and/or sensors are present. The actuators and/or sensors upload their capabilities in the form of service description to a well-known server SDR. Sensors may be applied for responding to a request of interaction made in the interactive movie. For instance a kinect gesture sensor that interacts with the children or a sensor integrated in the client device CD such as touch sensor in a tablet PC. The children for example must wave one or more times before the video starts again in case of the kinect gesture sensor. Another possibility is the interaction is requested from a tablet where the child has to draw something specific, e.g. the child has to draw a picture select a choice on a screen, in case of a touch sensor integrated in the client device CD.

The integration server IS instructs the media server MS to start streaming the video to the user, and to stop the movie at frame 254 in the above example. Subsequently, the input or an action from the user is requested. When the user executed the action the movie will continue at frame 80001.

Now interaction with the drawing application on the tablet is expected. Expectation is that the child draws a flower. When flower is drawn the video is started again.

It is to be noted that the each of the integration server IS, the media server MS may be located, locally in the home of the user of the client device or be located external to the home, at third party premises such as the premises of a video on demand provider.

It is further to be noted that the ITS may be located, locally in the home of the user of the client device or be located external to the home, at third party premises such as a cloud based server.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

Metadata corresponding above example:

```
 <frame>
 <number>254</number>
 <requirement><input>kinect:wavel</input>
 <action>wait-on-response-user:timer:30</action>
 </requirement>
 <select-scene>
 <script>
 // on input select frame to jump to
 In case of number of waves:
 Case 0:
 // time out
 jump frame 22000;
 break;
 case 1 :
 // one wave
 Jump frame 80000:
 </select-scene>
 </frame>
 <frame>
 <number>80000</number>
 <requirement><input>tablet:drawingapp:flower</input>
 <action>wait-on-response-user:timer:60</action>
 </requirement>
 <select-scene>
 <script>
 // on input select frame to jump to
 In case of number of flower:
 Jump frame 80001 :
 </frame>
```

Further alternative embodiment of the present invention may be tourist applications, educational applications, entertainment -, gaming applications or a combination thereof.

In case of a tourist application a multimedia asset (could be sound only, or movie with sound) is used to guide tourist through a city center. The loT sensor devices that are used are GPS and NFC (Near field communication)/RFID for example, and vibration of the smartphone.

When the tourist starts a tour, the tourist media asset is streamed to the CD device with information of the city. The GPS information is used to start different scene's in the stream. The tourist is guided to a cathedral, arrived on the cathedral an input of the user is expected, e.g. touching with NFC or RFID a touristic board to get special information of the cathedral. The tourist is guide on his personal interested and not on a fixed tour as the tourist may choose only the information-items in the cathedral he is interested in. The tourist moreover may choose from a list of tourist sights including the cathedral.

Another embodiment of the present invention could be education, for example a cooking program. The end-user selects a cooking class multimedia asset related to a certain recipe, and the multimedia stream is started with the mentioning of all the required ingredients, the multimedia stream will halt until all goods are scanned with QR code reader (before the cooking multimedia stream proceeds). The QR-reader sends all QR codes via the internet of things enable server ITS to the Integration Server IS. If all ingredients are present, i.e. at receipt of all relevant QR-codes corresponding to the required ingredients, the streaming of the multimedia stream is continued at the next scene for weighing the goods. Here, at this stage the integration server IS is waiting for input of the weight scale for each product. At receipt of all correct inputs of the scale indicating all weights are correct, the integration server instructs to proceed streaming the next part of the multimedia asset including the next part of the cooking instruction. In this manner, the user is guide/educated through all the steps necessary to make a successful meal.

## Claims

1. System for providing a client device (CD) with a media asset for playing out said media asset at said client device (CD), portions of said media asset being associated with metadata, said system comprising:
-. means configured to forward a portion of said media asset towards said client device (CD); and
-. means configured to notify an integration server (IS) of an identification of said portion of said media asset being provided to said client device (CD) for play out at said client device (CD); and
-. means, in said integration server (IS), configured to retrieve metadata associated with said portion of said media asset provided; and
-. means in said integration server (IS), configured to retrieve at least one service description in function of said metadata retrieved, each service description of said at least one service description defining a service to be provided by a respective internet of things enabled device of a plurality of internet of things devices (D1, D2, D3) each internet of things enabled device being associated with a user of said client device (CD); and
-. means, in said integration server (IS), configured to determine, in function of said portion of media asset being provided to said client device, said metadata associated with said portion of said media asset provided and said at least one service description , a media experience enrichment action.

2. System according to claim 1, wherein said media experience enrichment action includes an invocation of a service of a respective internet of things enabled device (D1, D2, D3) associated with said user of said client device.

3. System according to claim 1 or claim 2, wherein said media experience enrichment action includes a media asset management action.

4. Method for providing a client device (CD) with a media asset for playing out said media asset at said client device (CD), portions of said media asset being associated with metadata, said method comprising the steps of:
-. a media server (MS) forwarding a portion of said media asset towards said client device (CD); and
-. said media server (MS) notifying an integration server (IS) of said portion of said media asset being provided to said client device (CD) for play out at said client device (CD); and
-. said integration server (IS) retrieving metadata associated with said portion of said media asset provided; and
-. said integration server (IS) retrieving at least one service description in function of said metadata retrieved, each service description of said at least one service description defining a service to be provided by a respective internet of things enabled device of a plurality of internet of things devices (D1, D2, D3) each internet of things enabled device being associated with a user of said client device (CD); and
-. said integration server (IS), determining, in function of said portion of media asset being provided to said client device, said metadata associated with said portion of said media asset provided and said at least one service description , a media experience enrichment action.

5. Method for providing a client device (CD) with a media asset according to claim 4, wherein said media experience enrichment action includes an invocation of a service of a respective internet of things enabled device (D1, D2, D3) associated with said user of said client device.

6. Method for providing a client device (CD) with a media asset according to claim 4 or claim 5, wherein said media experience enrichment action includes a media asset management action.

7. Integration server (IS) for use in the system according to claim 1, for providing a client device (CD) with a media asset for playing out said media asset at said client device (CD), portions of said media asset being associated with metadata, said integration server (IS) being configured to:
- receive a notification from a media server (MS) of a portion of said media asset being provided to said client device for play out at said client device (CD);
- retrieve metadata associated with said portion of said media asset provided;
- retrieve at least one service description in function of said metadata retrieved, each service description of said at least one service description defining a service to be provided by a respective internet of things enabled device of a plurality of internet of things enabled devices (D1, D2, D3) being associated with a user of said client device;
- determine, in function of said portion of said media asset being provided to said client device (CD), said metadata associated with said portion of said media asset provided and said at least one service description , a media experience enrichment action.

8. Integration server (IS) according to claim 7, being further configured to invoke a service of a respective internet of things enabled device (D1, D2, D3) associated with said user of said client device.

9. Integration server (IS) according to claim 7 or 8, being further configured to instruct said media server (MS) to execute a media asset management action.

10. Internet of things enabled server (ITS) for use the system according to claim 1, being configured to:
- hold at least one service description, each service description of said at least one service description defining a service to be provided by a respective internet of things enabled device of a plurality of internet of things enabled devices (D1, D2, D3) each internet of things enabled device being associated with a user of said client device;
- forward said at least one service description, towards said Integration server (IS).

11. Media Server (MS) for use the system according to claim 1, being configured to:
- forward a portion of said media asset towards said client device (CD);
- notify said integration server (IS) of said portion of said media asset being provided to said client device for play out at said client device (CD).

12. Media Server (MS) according to claim 11, further being configured to instruct said media server (MS) to execute a media asset management action.

13. Internet of things enabled device (D1, D2, D3) for use in a system according to claim 1.
